(19) Europäisches Patentamt
European Patent Office
Office européen des brevets

(11) EP 3 310 630 B1

(12) EUROPÄISCHE PATENTSCHRIFT

(45) Veröffentlichungstag und Bekanntmachung des Hinweises auf die Patenterteilung:
26.06.2019 Patentblatt 2019/26

(51) Int Cl.:
*B60T 13/74* (2006.01)

(21) Anmeldenummer: 16722550.7

(86) Internationale Anmeldenummer:
PCT/EP2016/059238

(22) Anmeldetag: 26.04.2016

(87) Internationale Veröffentlichungsnummer:
WO 2016/206832 (29.12.2016 Gazette 2016/52)

(54) **VERFAHREN ZUR ERMITTLUNG DES STELLWEGS IN EINER ELEKTROMECHANISCHEN BREMSVORRICHTUNG**

METHOD FOR DETERMINING THE ACTUATION DISTANCE IN AN ELECTROMECHANICAL BRAKE DEVICE

PROCÉDÉ DE DÉTERMINATION DE LA COURSE DE RÉGLAGE DANS UN DISPOSITIF DE FREINAGE ÉLECTROMÉCANIQUE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 22.06.2015 DE 102015211468

(43) Veröffentlichungstag der Anmeldung:
25.04.2018 Patentblatt 2018/17

(73) Patentinhaber: Robert Bosch GmbH
70442 Stuttgart (DE)

(72) Erfinder:
• BAEHRLE-MILLER, Frank
71101 Schoenaich (DE)
• ENGLERT, Andreas
74199 Untergruppenbach (DE)
• PUTZER, Tobias
74177 Bad Friedrichshall (DE)

(56) Entgegenhaltungen:
DE-A1-102011 004 704    DE-A1-102012 205 576
DE-A1-102012 206 223

**Beschreibung**

Die Erfindung bezieht sich auf ein Verfahren zur Ermittlung des Stellwegs in einer elektromechanischen Bremsvorrichtung in einem Fahrzeug.

Stand der Technik

Bekannt sind Park- bzw. Feststellbremsen, über die eine das Fahrzeug im Stillstand festsetzende Klemmkraft erzeugt wird. Die Parkbremse ist als eine elektromechanische Bremsvorrichtung mit einem elektrischen Bremsmotor ausgeführt, dessen Motorwelle eine Spindel antreibt, auf der eine Spindelmutter aufsitzt, welche durch die Rotationsbewegung der Spindel in Richtung auf einen Bremskolben verstellt wird. Der Bremskolben ist Träger eines Bremsbelages und wird bei der Antriebsbewegung des Bremsmotors gegen eine Bremsscheibe beaufschlagt. Eine derartige elektromechanische Bremsvorrichtung wird beispielsweise in der DE 10 2012 205 576 A1 oder der DE 10 2011 004 704 A1 beschrieben.

Zur Bestimmung der Klemmkraft muss die Motorkonstante des elektrischen Bremsmotors bekannt sein, deren Wert Fertigungstoleranzen unterliegt und außerdem alterungs- und temperaturbedingt schwanken kann. Gemäß der DE 10 2012 205 576 A1 werden zur Ermittlung der Motorkonstanten die Spannung und der Motorstrom während einer Leerlaufphase am Bremsmotor gemessen, zudem wird der Motorstrom während einer dynamischen Stromänderungsphase ermittelt.

Zum Aufbau der Klemmkraft muss zunächst eine Leerlaufphase überwunden werden, während der die Spindelmutter aufgrund der Antriebsbewegung des Bremsmotors in Richtung auf die Scheibenbremse verstellt wird, jedoch noch kein Kontakt zwischen Bremsbelag und Bremsscheibe besteht.

Offenbarung der Erfindung

Das erfindungsgemäße Verfahren wird zur Ermittlung und ggf. auch zur Einstellung des Stellwegs in einer elektromechanischen Bremsvorrichtung mit einem elektrischen Bremsmotor in einem Fahrzeug eingesetzt. Mithilfe des Verfahrens ist es beispielsweise möglich, den Leerweg (Lüftspiel), währenddem noch keine Brems- bzw. Klemmkraft von der elektromechanischen Bremsvorrichtung ausgeübt wird, auf ein geringes Maß ggf. als Ausgangspunkt der Spindelmutter für einen folgenden Zuspannvorgang einzustellen, wodurch sich die Zeitspanne bis zum Aufbau der Bremskraft bei dem Zuspannvorgang verkürzt. Der Stellweg kann mit einer hohen Präzision bestimmt werden, so dass beispielsweise ein Bremsenschleifen mit einem versehentlichen Kontakt zwischen Bremsbelag und Bremsscheibe vermieden wird. Allgemein kann der Stellweg sowohl bei einem Zuspannvorgang als auch bei einem Lösevorgang in der Bremsvorrichtung bestimmt werden, jeweils bezogen auf die Leerlaufphase und/oder die Kraftaufbau- bzw. Kraftabbauphase. Der Stellweg bezieht sich auf die Stellbewegung des elektrischen Bremsmotors bzw. eines vom Bremsmotor angetriebenen Bauteils wie zum Beispiel eine Spindelmutter.

Bei dem Verfahren treibt die Motorwelle des elektrischen Bremsmotors, der Teil der elektromechanischen Bremsvorrichtung ist, eine Spindel an, auf der eine Spindelmutter aufsitzt. Diese wird durch die Rotationsbewegung der Spindel axial in Richtung auf einen Bremskolben verstellt, der Träger eines Bremsbelages ist, welcher gegen die Bremsscheibe zur Erzeugung der gewünschten Bremskraft gedrückt wird. Beim Zuspannvorgang muss ein Leerweg von dem elektrischen Bremsmotor überwunden werden, welcher den Spindelmutterweg vor dem Auftreffen der Spindelmutter auf den Bremskolben bezeichnet. Um z.B. den Leerweg zu reduzieren, muss die aktuelle Spindelmutterposition mit hoher Genauigkeit bekannt sein.

Beim erfindungsgemäßen Verfahren wird der Spindelmutterweg zunächst unter Berücksichtigung eines Ausgangswertes der Motorkonstanten und eines Ausgangswertes des Motorgesamtwiderstands (Summe der Einzelwiderstände von Bremsmotor und Leitungen zum Bremsmotor) ermittelt. Anschließend wird, nach der Durchführung einer Schätzung der Motorkonstanten und des Motorgesamtwiderstandes, eine Korrektur des Spindelmutterwegs unter Berücksichtigung der Schätzwerte für die Motorkonstante und des Motorgesamtwiderstandes durchgeführt. Der Spindelmutterweg liegt daraufhin bezogen auf einen Ausgangspunkt, beispielsweise eine zurückgezogene Anschlagstellung, vor.

Diese Vorgehensweise hat den Vorteil, dass die aktuellen Werte für die Motorkonstante und den Motorgesamtwiderstand für die Ermittlung des Spindelmutterwegs berücksichtigt werden. Damit ist es möglich, beispielsweise temperatur- oder alterungsbedingte Änderungen in diesen Werten zu erfassen und gegenüber den Ausgangswerten zu verbessern. Dementsprechend liegt auch der Spindelmutterweg mit einer höheren Genauigkeit vor und kann der elektrische Bremsmotor so angesteuert werden, dass der Stellweg der Spindelmutter auf einen gewünschten Wert eingestellt wird, beispielsweise der Leerweg bzw. das Lüftspiel der Spindelmutter bis zum Auftreffen auf den Bremskolben signifikant reduziert wird.

Zunächst wird bei der Verstellung der Spindelmutter der Spindelmutterweg noch mit Ausgangswerten für die Motorkonstante und den Motorgesamtwiderstand ermittelt. Nach dem Start der Spindelmutterverstellung werden die Motorkonstante und der Motorgesamtwiderstand geschätzt, insbesondere auf der Grundlage der Motorspannung und des Motorstroms im Bremsmotor. Nach dem Durchführen der Schätzung wird eine Korrektur des ermittelten Spindelmutterwegs mit den nun aktuellen Schätzwerten für die Motorkonstante und dem Motorgesamtwiderstand durchgeführt.

Die Ermittlung des Spindelmutterwegs erfolgt im ersten Schritt mit Ausgangswerten für die Motorkonstante und dem Motorgesamtwiderstand. Die Schätzung erfolgt üblicherweise in einem kleinen Zeitabstand, beispielsweise etwa 0.2 Sekunden oder 0.3 Sekunden nach dem Beginn des Zuspannvorganges. Nachdem die geschätzten Werte für die Motorkonstante und den Motorgesamtwiderstand vorliegen, kann die Korrektur durchgeführt werden. Es ist aber auch möglich, die Korrektur zu einem festen Zeitpunkt durchzuführen, der vorzugsweise nach der Schätzung von Motorkonstante und Motorgesamtwiderstand liegt, beispielsweise bei 0.6 Sekunden.

Gemäß einer zweckmäßigen weiteren Ausführung erfolgt die Ermittlung des Spindelmutterwegs einschließlich der Korrektur in verschiedenen Phasen, die zeitlich aufeinanderfolgend durchgeführt werden, wobei in den verschiedenen Phasen unterschiedliche Fehlerarten ausgeglichen werden. Eine erste Fehlerart entsteht durch die Ermittlung des Spindelmutterwegs auf der Grundlage nicht-aktueller Werte für die Motorkonstante und den Motorgesamtwiderstand, falls die Schätzwerte für diese Parameter noch nicht vorliegen. Die nicht-aktuellen Werte für die Motorkonstante und den Motorgesamtwiderstand stammen entweder aus Voreinstellungen oder aus früheren Schätzungen. Eine zweite Fehlerart betrifft den Zeitraum nach dem Vorliegen der geschätzten Parameter für die Motorkonstante und den Motorgesamtwiderstand, falls keine Korrektur durchgeführt wird. Mithilfe des erfindungsgemäßen Verfahrens können beide Fehlerarten kompensiert werden.

Gemäß einer vorteilhaften Ausführung wird das Verfahren zur Ermittlung des Stellwegs bei einem Zuspannvorgang der elektromechanischen Bremsvorrichtung durchgeführt, bei dem eine Klemm- bzw. Bremskraft aufgebaut wird. Möglich ist aber auch eine Durchführung des Verfahrens bei einem Lösevorgang der elektromechanischen Bremsvorrichtung, bei dem eine bestehende Bremskraft abgebaut wird. Im letztgenannten Fall ist es zweckmäßig, dass der Spindelmutterweg erst mit dem Beginn der Leerlaufphase des Bremsmotors ermittelt wird. Die verschiedenen Verfahrensschritte können entweder alle nur während eines Lösevorgangs oder nur während eines Zuspannvorganges durchgeführt werden. Es ist aber auch möglich, einen Verfahrensschritt bei einem Zuspannvorgang und einen weiteren Verfahrensschritt bei einem Lösevorgang durchzuführen.

Das gesamte Verfahren wird in einem Regel- bzw. Steuergerät im Fahrzeug durchgeführt. Dieses Regel- bzw. Steuergerät kann Teil der elektromechanischen Bremsvorrichtung sein und erzeugt Stellsignale zur Ansteuerung der einstellbaren Komponenten der Bremsvorrichtung.

Weitere Vorteile und zweckmäßige Ausführungen sind den weiteren Ansprüchen, der Figurenbeschreibung und den Zeichnungen zu entnehmen. Es zeigen:

Fig. 1    einen Schnitt durch eine elektromechanische Bremsvorrichtung, die als Feststellbremse in einem Fahrzeug einsetzbar ist und bei der die Brems- bzw. Klemmkraft über einen elektrischen Bremsmotor erzeugt werden kann,

Fig. 2    ein Ablaufschema zur Ermittlung des Leerwegs in der elektromechanischen Bremsvorrichtung,

Fig. 3    ein Schaubild mit dem zeitabhängigen Verlauf des Spindelmutterweges mit und ohne Korrektur.

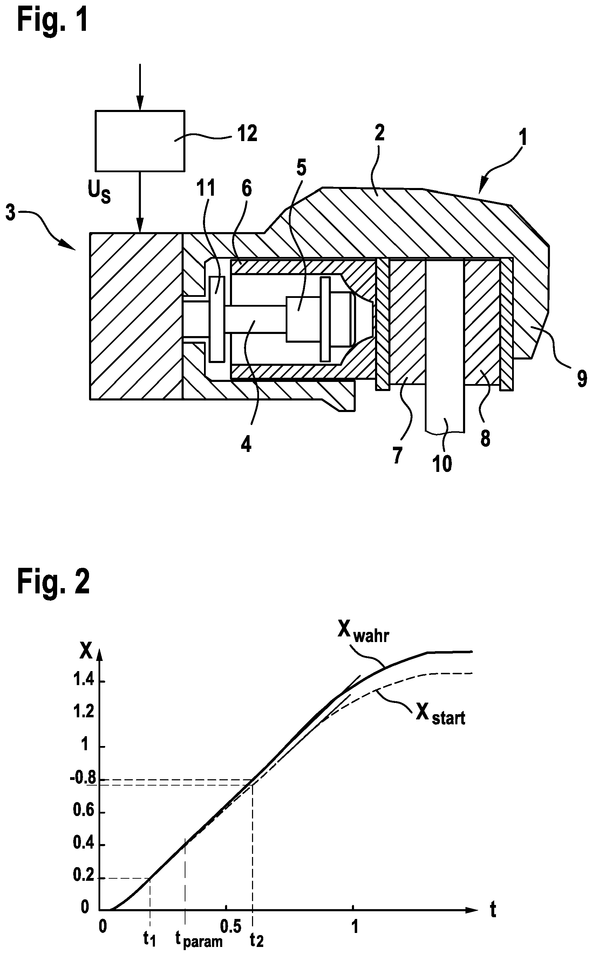

In Fig. 1 ist eine elektromechanische Bremsvorrichtung 1 zum Festsetzen eines Fahrzeugs im Stillstand dargestellt. Die Bremsvorrichtung 1 umfasst einen Bremssattel 2 mit einer Zange 9, welche eine Bremsscheibe 10 übergreift. Als Stellglied weist die Bremsvorrichtung 1 einen Gleichstrom-Elektromotor als Bremsmotor 3 auf, dessen Motorwelle eine Spindel 4 rotierend antreibt, auf der eine Spindelmutter 5 drehbar gelagert ist. Bei einer Rotation der Spindel 4 wird die Spindelmutter 5 axial verstellt. Die Spindelmutter 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich die Spindelmutter 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt die Spindelmutter 5 die innere Stirnseite des Bremskolbens 6, wodurch der axial verschieblich in der Bremsvorrichtung 1 gelagerte Bremskolben 6 mit dem Bremsbelag 7 gegen die zugewandte Stirnfläche der Bremsscheibe 10 gedrückt wird.

Der Bremsmotor 3 wird von einem Regel- bzw. Steuergerät 12 angesteuert, das Teil der Bremsvorrichtung 1 ist. Das Regel- bzw. Steuergerät 12 liefert als Ausgang eine Versorgungsspannung $U_S$, mit der der elektrische Bremsmotor 3 beaufschlagt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

Fig. 2 zeigt den Spindelmutterweg x in Abhängigkeit der Zeit zu Beginn eines Zuspannvorganges zum Aufbau von Brems- bzw. Klemmkraft. Eingetragen sind zwei unterschiedliche Kurven $x_{start}$ und $x_{wahr}$, die aufgrund unterschiedlicher Parameter der Motorkonstanten und des Motorgesamtwiderstandes ermittelt werden. Der Spindelmutterweg $x_{start}$ stellt den nicht-korrigierten Weg der Spindelmutter unter Verwendung von nicht-aktuellen Parametern der Motorkonstanten und des Motorgesamtwiderstandes dar. Der Spindelmutterweg $x_{wahr}$ ist dagegen der korrigierte Spindelmutterweg, der unter Verwendung aktueller Parameter für die Motorkonstante und den Gesamtwiderstand ermittelt wird. Der Zeitpunkt, zu dem aktuelle Schätzwerte der Motorkonstanten vorliegen, die aus der Versorgungsspannung $U_S$ und dem Motorstrom $i_A$ im Leerlauf des Motors ermittelt werden, ist mit $t_{param}$ gekennzeichnet.

Der Spindelmutterweg befindet sich in der Leerlaufphase in einem konstanten Anstieg, der näherungsweise als Gerade darstellbar ist. Eingetragen sind in Fig. 2 zwei Zeitpunkte $t_1$ und $t_2$, die in dem linearen Anstieg von $x_{start}$ und $x_{wahr}$ liegen und zwischen denen sich der Zeitpunkt $t_{param}$ befindet, zu dem die Schätzung der Motorkonstanten und des Motorgesamtwiderstandes vorliegt.

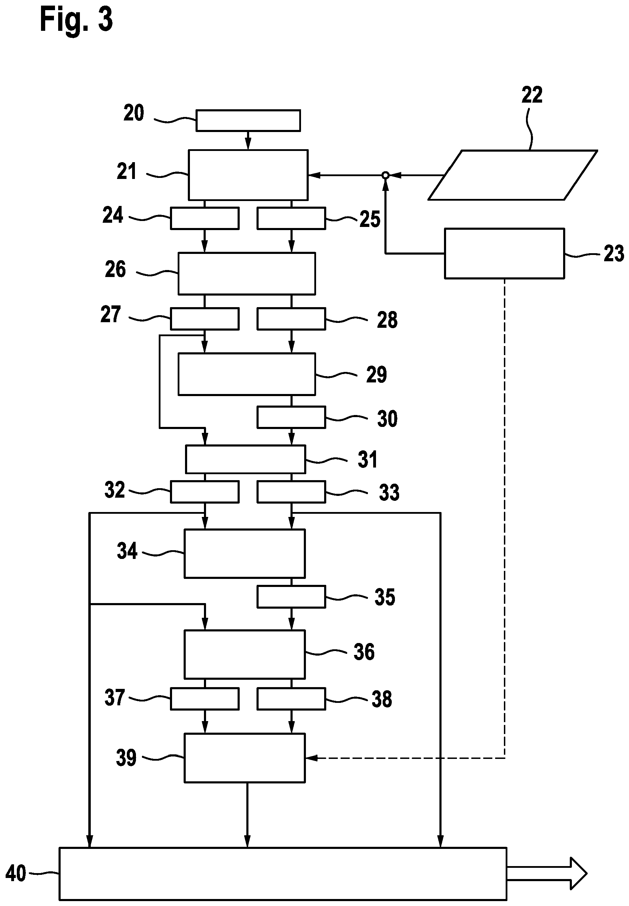

In Fig. 3 ist ein Ablaufschema zur Ermittlung des Spindelmutterwegs mit hoher Genauigkeit dargestellt. Dies ermöglicht es, den Stellweg der Spindelmutter zu bestimmen, insbesondere den Leerweg der Spindelmutter zu reduzieren, so dass bei einem Zuspannvorgang die Zeitspanne bis zum Aufbau einer Soll-Bremskraft verkürzt wird, ohne dass die Gefahr eines Bremsenschleifens besteht.

Im Schritt 20 wird das Verfahren zur Ermittlung des Spindelmutterwegs gestartet. Es wird der aktuelle Motorstrom $i_A$ sowie die Versorgungsspannung $U_S$ bestimmt, aus denen gemäß

$$\omega(t) = \frac{1}{K_M} \cdot \left[ U_S(t) - R_{ges} \cdot i_A(t) \right]$$

die Winkelgeschwindigkeit $\omega$ der Motorwelle des elektrischen Bremsmotors im Leerlauf berechnet werden kann. Die Winkelgeschwindigkeit $\omega$ hängt von der Motorkonstanten $K_M$ und dem Motorgesamtwiderstand $R_{ges}$ ab; diese Parameter liegen entweder als nicht-aktuelle Startwerte $K_{M,start}$ und $R_{ges,start}$ vor oder, nach dem Zeitpunkt $t_{param}$, als aktuelle Schätzwerte $K_{M,est}$ bzw. $R_{ges,est}$. Je nach aktuellem Zeitpunkt werden die Motorkonstante und der Motorgesamtwiderstand entweder aus einem Block 22 als nicht-aktuelle Werte oder einem Block 23 als aktuelle Schätzwerte zugeführt und im Block 21 für die Berechnung der Winkelgeschwindigkeit herangezogen, wobei entsprechend in den Blöcken 24 und 25 die Winkelgeschwindigkeit $\omega_{start}$ bzw. die geschätzte Winkelgeschwindigkeit $\omega_{est}$ geliefert werden.

Der jeweilige Winkelgeschwindigkeitswert wird einem folgenden Block 26 zugeführt, in welchem die Spindelmuttergeschwindigkeit $V_{Sp}$ berechnet wird. Die Berechnung erfolgt gemäß

$$v_{Sp,start}(t) = \omega_{start}(t) \cdot \frac{S_{Sp}}{2 \cdot \pi \cdot i_{Getr}}$$

$$v_{Sp,est}(t) = \omega_{est}(t) \cdot \frac{S_{Sp}}{2 \cdot \pi \cdot i_{Getr}}$$

für den Startwert $v_{Sp,start}$ der Spindelmuttergeschwindigkeit in Abhängigkeit von $\omega_{start}$ und für den geschätzten Wert $v_{Sp,est}$ in Abhängigkeit der geschätzten Winkelgeschwindigkeit $\omega_{est}$. Hierbei wird die Spindelsteigung $S_{Sp}$ sowie die Getriebeübersetzung $i_{Getr}$ eines dem Bremsmotor nachgeschalteten Getriebes berücksichtigt.

Die Startgeschwindigkeit $v_{Sp,start}$ der Spindelmutter und die geschätzte Geschwindigkeit $v_{Sp,est}$ der Spindelmutter werden gemäß den Blöcken 27 und 28 einem weiteren Schritt 29 zugeführt, der den Beginn des Fehlerausgleichs kennzeichnet. Im Schritt 30 wird die Differenz der Startgeschwindigkeit und der geschätzten Geschwindigkeit der Spindelmutter ermittelt, im Schritt 31 erfolgt eine Integration der Differenzgeschwindigkeit über der Zeit gemäß

$$x_{delta}(t) = \int \left[ v_{Sp,start}(t) - v_{Sp,est}(t) \right] dt$$

woraus man einen Korrekturweg $x_{delta}$ erhält. Gemeinsam mit

$$x_{start}(t) = \left( \frac{1}{K_{M,start}} \cdot \frac{S_{Sp}}{2 \cdot \pi \cdot i_{Getr}} \right) \cdot \int \left[ U_S(t) - R_{ges,start} \cdot i_A(t) \right] dt$$

kann aus dem Spindelmutterweg $x_{start}$, der auf der Grundlage nicht-aktueller Parameter $K_{M,start}$ und $R_{ges,start}$ der Motorkonstanten bzw. des Motorgesamtwiderstandes ermittelt wird, im Schritt 31 eine Integration über der Zeit durchgeführt werden. Hieraus erhält man in den Schritten 32 und 33 den Spindelmutterweg $x_{start}$ sowie den Korrekturweg $x_{delta}$, die im nächsten Schritt 34 gemäß

$$x_{wahr}(t) = x_{start}(t) - x_{delta}(t)$$

zum korrigierten Spindelmutterweg $x_{wahr}$ führen.

Der korrigierte Spindelmutterweg $x_{wahr}$ wird im Schritt 35 weitergereicht und wird im folgenden Schritt 36 gemäß

$$x_{start,steig} = \frac{x_{start}(t_2) - x_{start}(t_1)}{t_2 - t_1}$$

$$x_{wahr,steig} = \frac{x_{wahr}(t_2) - x_{wahr}(t_1)}{t_2 - t_1},$$

zur Berechnung des Anstiegs $x_{start,steig}$ des Spindelmutterwegs auf der Grundlage nicht-aktueller Parameter der Motorkonstanten und des Motorgesamtwiderstandes und zum Anstieg $x_{wahr,steig}$ auf der Grundlage aktueller Parameter der Motorkonstanten und des Motorgesamtwiderstandes herangezogen. Der Anstieg $x_{start,steig}$ bzw. $x_{wahr,steig}$ entspricht demjenigen der Geraden aus Fig. 2, mit denen die Kurven von $x_{wahr}$ und $x_{start}$ angenähert werden.

Die Werte von $x_{start,steig}$ und $x_{wahr,steig}$ werden in den Schritten 37 und 38 zum folgenden Schritt 39 weitergereicht, in welchem eine Abweichung $x_{def}$ gemäß

$$x_{def} = \left( x_{start,steig} - x_{wahr,steig} \right) \cdot t_{param}$$

aus der Differenz von $x_{start,steig}$ und $x_{wahr,steig}$ multipliziert mit dem Zeitpunkt $t_{param}$, zu dem die Schätzung der Motorkonstanten und des Motorgesamtwiderstandes vorliegen, durchgeführt wird. Der Zeitparameter $t_{param}$ wird dem Schritt 39 aus dem Schritt 23 zugeführt.

Im nächsten Schritt 40 erfolgt gemäß

$$x_{ges}(t) = x_{wahr}(t) - x_{def}$$

die Ermittlung des korrigierten Gesamtwertes $x_{ges}$ des Spindelmutterweges durch Differenzbildung von $x_{wahr}$ und $x_{def}$. Damit steht die absolute Position der Spindelmutter, bezogen auf einen Ausgangswert, fest, und es kann die Spindelmutterposition mit einem geringen Spiel vor dem Bremskolben eingestellt werden, so dass bei einer Betätigung des Bremsmotors nur eine minimale Zeit bis zum Aufbau von Bremskraft verstreicht.

**Patentansprüche**

1. Verfahren zur Ermittlung des Stellwegs in einer elektromechanischen Bremsvorrichtung (1) mit einem elektrischen Bremsmotor (3) in einem Fahrzeug, dessen Motorwelle eine Spindel (4) antreibt, auf der eine Spindelmutter (5) aufsitzt, die durch die Rotationsbewegung der Spindel (4) in Richtung auf einen Bremskolben (6) verstellt wird, wobei der Spindelmutterweg ($x_{start}$) zunächst unter Berücksichtigung eines Motorkonstante-Ausgangswerts ($K_{M,start}$) und eines Motorgesamtwiderstand-Ausgangswerts ($R_{ges,start}$) ermittelt und anschließend, nach dem Durchführen einer Schätzung, eine Korrektur des Spindelmutterwegs ($x_{start}$) unter Berücksichtigung eines Motorkonstante-Schätzwerts ($K_{M,est}$) und eines Motorgesamtwiderstand-Schätzwerts ($R_{ges,est}$) durchgeführt wird.

2. Verfahren nach Anspruch 1, **dadurch gekennzeichnet, dass** der Spindelmutterweg ($x_{start}$) unter Berücksichtigung der Versorgungsspannung ($U_S$) und des Motorstroms ($i_A$) mit dem Motorkonstante-Ausgangswert ($K_{M,start}$) und dem Motorgesamtwiderstand-Ausgangswert ($R_{ges,start}$) gemäß

$$x_{start}(t) = \left( \frac{1}{K_{M,start}} \cdot \frac{S_{Sp}}{2 \cdot \pi \cdot i_{Getr}} \right) \cdot \int \left[ U_S(t) - R_{ges,start} \cdot i_A(t) \right] dt$$

berechnet wird, wobei

$S_{Sp}$ die Spindelsteigung
$i_{Getr}$ die Getriebeübersetzung eines dem Bremsmotor nachgeschalteten Getriebes

bedeuten.

3. Verfahren nach Anspruch 2, **dadurch gekennzeichnet, dass** ein Korrekturweg ($x_{delta}$) aus

$$x_{delta}(t) = \int \left[ v_{Sp,start}(t) - v_{Sp,est}(t) \right] dt$$

$$v_{Sp,start}(t) = \omega_{start}(t) \cdot \frac{S_{Sp}}{2 \cdot \pi \cdot i_{Getr}}$$

$$v_{Sp,est}(t) = \omega_{est}(t) \cdot \frac{S_{Sp}}{2 \cdot \pi \cdot i_{Getr}}$$

ermittelt wird, wobei ein korrigierter Spindelmutterweg ($x_{wahr}$) durch Subtraktion des Korrekturwegs ($x_{delta}$) vom Spindelmutterweg ($x_{start}$) ermittelt wird:

$$x_{wahr}(t) = x_{start}(t) - x_{delta}(t)$$

4. Verfahren nach Anspruch 3, **dadurch gekennzeichnet, dass** als weiterer Fehler die Abweichung ($x_{def}$) zwischen dem Anstieg ($x_{start,steig}$) des Spindelmutterwegs mit nicht-aktuellem Motorkonstante-Schätzwert ($K_{M,start}$) bzw. Motorgesamtwiderstand-Schätzwert ($R_{ges,start}$) und dem Anstieg ($x_{wahr,steig}$) des korrigierten Spindelmutterwegs ($x_{wahr}$) mit aktuellem Motorkonstante-Schätzwert ($K_{M,est}$) bzw. Motorgesamtwiderstand-Schätzwert ($R_{ges,est}$) berücksichtigt wird:

$$x_{def} = \left( x_{start,steig} - x_{wahr,steig} \right) \cdot t_{param}$$

$$x_{start,steig} = \frac{x_{start}(t_2) - x_{start}(t_1)}{t_2 - t_1}$$

$$x_{wahr,steig} = \frac{x_{wahr}(t_2) - x_{wahr}(t_1)}{t_2 - t_1} ,$$

wobei

$t_{param}$ die Zeitspanne bis zum Vorliegen des aktuellen Motorkonstante-Schätzwerts ($K_{M,est}$) und des Motorgesamtwiderstand-Schätzwerts ($R_{ges,est}$) bezeichnen.

**5.** Verfahren nach Anspruch 4, **dadurch gekennzeichnet, dass** unter Berücksichtigung der Abweichung ($x_{def}$) der korrigierte Gesamtweg ($x_{ges}$) der Spindelmutter (5) ermittelt wird:

$$x_{ges}(t) = x_{wahr}(t) - x_{def}$$

**6.** Verfahren nach einem der Ansprüche 1 bis 5, **dadurch gekennzeichnet, dass** als Motorkonstante-Ausgangswert ($K_{M,start}$) und als Motorgesamtwiderstand-Ausgangswert ($R_{ges,start}$) Schätzwerte aus einem vorangegangenen Zuspann- oder Lösevorgang der elektromechanischen Bremsvorrichtung (1) verwendet werden.

**7.** Verfahren nach einem der Ansprüche 1 bis 6, **dadurch gekennzeichnet, dass** das Verfahren bei einem Zuspannvorgang der elektromechanischen Bremsvorrichtung (1) durchgeführt wird.

**8.** Verfahren nach einem der Ansprüche 1 bis 7, **dadurch gekennzeichnet, dass** das Verfahren bei einem Lösevorgang der elektromechanischen Bremsvorrichtung (1) durchgeführt wird.

**9.** Verfahren nach Anspruch 8, **dadurch gekennzeichnet, dass** der Spindelmutterweg ($x_{start}$) erst mit Beginn der Leerlaufphase des Bremsmotors (3) ermittelt wird.

**10.** Regel- bzw. Steuergerät (12) zur Durchführung des Verfahrens nach einem der Ansprüche 1 bis 9.

**11.** Elektromechanische Bremsvorrichtung mit einem elektrischen Bremsmotor (3) in einem Fahrzeug, mit einem Regel- bzw. Steuergerät (12) zur Ansteuerung der einstellbaren Komponenten der Bremsvorrichtung (1) nach Anspruch 10.

**Claims**

**1.** Method for determining the actuation distance in an electromechanical brake mechanism (1) with an electric brake motor (3) in a vehicle, the motor shaft of which drives a spindle (4) on which sits a spindle nut (5) that is displaced towards a brake piston (6) by the rotational movement of the spindle (4), whereby the spindle nut travel ($x_{start}$) is first determined while taking into account a motor constant initial value ($K_{M,start}$) and a total motor resistance initial value ($R_{ges,start}$) and then, after performing an estimation, a correction of the spindle nut travel ($x_{start}$) is carried out while taking into account a motor constant estimated value ($K_{M,est}$) and a total motor resistance estimated value ($R_{ges,est}$).

**2.** Method according to Claim 1, **characterized in that** the spindle nut travel ($x_{start}$) is calculated while taking into account the supply voltage ($U_S$) and the motor current ($i_A$) with the motor constant initial value ($K_{M,start}$) and the total motor resistance initial value ($R_{ges,start}$) according to

$$x_{start}(t) = \left( \frac{1}{K_{M,start}} \cdot \frac{S_{Sp}}{2 \cdot \pi \cdot i_{Getr}} \right) \cdot \int \left[ U_S(t) - R_{ges,start} \cdot i_A(t) \right] dt$$

whereby

$S_{Sp}$ denotes the spindle gradient
$i_{Getr}$ denotes the transmission ratio of a gearbox connected downstream of the brake motor.

**3.** Method according to Claim 2, **characterized in that** a travel correction ($x_{delta}$) is determined from

$$x_{delta}(t) = \int \left[ v_{Sp,start}(t) - v_{Sp,est}(t) \right] dt$$

$$v_{Sp,start}(t) = \omega_{start}(t) \cdot \frac{S_{Sp}}{2 \cdot \pi \cdot i_{Getr}}$$

$$v_{Sp,est}(t) = \omega_{est}(t) \cdot \frac{S_{Sp}}{2 \cdot \pi \cdot i_{Getr}}$$

whereby a corrected spindle nut travel ($x_{wahr}$) is determined by subtraction of the travel correction ($x_{delta}$) from the spindle nut travel ($X_{start}$) :

$$x_{wahr}(t) = x_{start}(t) - x_{delta}(t)$$

4. Method according to Claim 3, **characterized in that** as a further error, the deviation ($x_{def}$) between the rise ($x_{start,steig}$) of the spindle nut travel with the non-current motor constant estimated value ($K_{M,start}$) and the total motor resistance estimated value ($R_{ges,start}$) and the rise ($x_{wahr,steig}$) of the corrected spindle nut travel ($x_{wahr}$) with the current motor constant estimated value ($K_{M,est}$) and the total motor resistance estimated value ($R_{ges,est}$) is taken into account:

$$x_{def} = \left( x_{start,steig} - x_{wahr,steig} \right) \cdot t_{param}$$

$$x_{start,steig} = \frac{x_{start}(t_2) - x_{start}(t_1)}{t_2 - t_1}$$

$$x_{wahr,steig} = \frac{x_{wahr}(t_2) - x_{wahr}(t_1)}{t_2 - t_1} ,$$

wherein

$t_{param}$ denotes the time interval until the current motor constant estimated value ($K_{M,est}$) and the total motor resistance estimated value ($R_{ges,est}$) are available.

5. Method according to Claim 4, **characterized in that** the corrected total travel ($x_{ges}$) of the spindle nut (5) is determined while taking into account the deviation ($x_{def}$):

$$x_{ges}(t) = x_{wahr}(t) - x_{def}$$

6. Method according to any one of Claims 1 through 5, **characterized in that** estimated values from a preceding clamping or releasing process of the electromechanical brake mechanism (1) are used as a motor constant initial value ($K_{M,start}$) and as a total motor resistance initial value ($R_{ges,start}$).

7. Method according to any one of Claims 1 through 6, **characterized in that** Method is carried out during a clamping process of the electromechanical brake mechanism (1).

8. Method according to any one of Claims 1 through 7, **characterized in that** the method is carried out during a releasing process of the electromechanical brake mechanism (1).

9. Method according to Claim 8, **characterized in that** the spindle nut travel ($x_{start}$) is only determined at the start of the no-load phase of the brake motor (3).

10. Regulating unit or control unit (12) for carrying out Method according to any one of Claims 1 through 9.

11. Electromechanical brake mechanism with an electric brake motor (3) in a vehicle, with a regulating unit or control unit (12) for actuating the adjustable components of the brake mechanism (1) according to Claim 10.

**Revendications**

1. Procédé de mesure d'une course de réglage dans un dispositif de frein électromécanique (1) doté d'un moteur frein (3) électrique dans un véhicule, dont l'arbre moteur entraîne une broche (4), sur laquelle repose un écrou de broche (5) qui est ajusté par le biais du mouvement de rotation de la broche (4) dans la direction d'un piston de frein (6), dans lequel le trajet de l'écrou de broche ($x_{start}$) est également mesuré en prenant en compte une valeur de sortie de constante de moteur ($K_{M,start}$) et une valeur de sortie de résistance moteur totale ($R_{ges,start}$) puis, après que l'estimation a été effectuée, une correction du trajet de l'écrou de broche ($x_{start}$) est effectuée en prenant en compte une valeur estimée de constante de moteur ($K_{M,est}$) et une valeur estimée de constante de résistance moteur totale ($R_{ges,start}$).

2. Procédé selon la revendication 1, **caractérisé en ce que** le trajet de l'écrou de broche ($x_{start}$) est calculé en prenant en compte la tension d'alimentation (Us) et l'intensité moteur ($i_A$), avec la valeur de sortie de constante de moteur ($K_{M,start}$) et la valeur de sortie de résistance moteur totale ($R_{ges,start}$), selon

$$x_{start}(t) = \left( \frac{1}{K_{M,start}} \cdot \frac{S_{Sp}}{2 \cdot \pi \cdot i_{Getr}} \right) \cdot \int \left[ U_S(t) - R_{ges,start} \cdot i_A(t) \right] dt$$

dans lequel $S_{Sp}$ est la puissance de broche et $i_{Getr}$ le rapport de transmission d'une transmission en aval du moteur frein.

3. Procédé selon la revendication 2, **caractérisé en ce qu'**un trajet de correction ($x_{delta}$) est mesuré à partir de

$$x_{delta}(t) = \int \left[ v_{Sp,start}(t) - v_{Sp,est}(t) \right] dt$$

$$v_{Sp,start}(t) = \omega_{start}(t) \cdot \frac{S_{Sp}}{2 \cdot \pi \cdot i_{Getr}}$$

$$v_{Sp,est}(t) = \omega_{est}(t) \cdot \frac{S_{Sp}}{2 \cdot \pi \cdot i_{Getr}}$$

dans lequel un trajet de l'écrou de broche corrigé ($x_{wahr}$) est mesuré par soustraction du trajet de correction ($x_{delta}$) au trajet de l'écrou de broche ($x_{ges}$) :

$$x_{wahr}(t) = x_{start}(t) - x_{delta}(t)$$

4. Procédé selon la revendication 3, **caractérisé en ce que**, comme autre erreur, la déviation ($x_{def}$) entre l'augmentation ($x_{start,steig}$) du trajet d'écrou de broche avec une valeur estimée non-actuelle de constante de moteur ($K_{M,start}$) ou une valeur estimée non-actuelle de constante de résistance moteur totale ($R_{ges,start}$) et l'augmentation ($x_{wahr,steig}$)

du trajet d'écrou de broche corrigé ($x_{wahr}$) avec une valeur estimée actuelle de constante de moteur ($K_{M,est}$) ou une valeur estimée actuelle de constante de résistance moteur totale ($R_{ges,est}$) :

$$x_{def} = \left(x_{start,steig} - x_{wahr,steig}\right) \cdot t_{param}$$

$$x_{start,steig} = \frac{x_{start}(t_2) - x_{start}(t_1)}{t_2 - t_1}$$

$$x_{wahr,steig} = \frac{x_{wahr}(t_2) - x_{wahr}(t_1)}{t_2 - t_1}$$

dans lequel $t_{param}$ est l'intervalle jusqu'à l'apparition de la valeur estimée actuelle de la constante de moteur ($K_{M,est}$) et la valeur estimée actuelle de constante de résistance moteur totale ($R_{ges,est}$).

5. Procédé selon la revendication 4, **caractérisé en ce que** le trajet total corrigé ($x_{ges}$) de l'écrou de broche (5) est mesuré en prenant en compte la déviation ($x_{def}$) :

$$x_{ges}(t) = x_{wahr}(t) - x_{def}$$

6. Procédé selon l'une des revendications 1 à 5, **caractérisé en ce que** des valeurs estimées provenant d'une précédente opération de serrage ou de desserrage du dispositif de frein électromécanique (1) sont utilisées comme valeur de sortie de constante de moteur ($K_{M,start}$) et comme valeur de sortie de résistance moteur totale ($R_{ges,start}$).

7. Procédé selon l'une des revendications 1 à 6, **caractérisé en ce que** le procédé est effectué lors d'une opération de serrage du dispositif de frein électromécanique (1).

8. Procédé selon l'une des revendications 1 à 7, **caractérisé en ce que** le procédé est effectué lors d'une opération de desserrage du dispositif de frein électromécanique (1).

9. Procédé selon la revendication 8, **caractérisé en ce que** le trajet de l'écrou de broche ($x_{start}$) est mesuré en premier avec le début de la phase de ralenti du moteur frein (3).

10. Appareil de commande ou de contrôle (12) destiné à effectuer un procédé selon l'une des revendications 1 à 9.

11. Dispositif de frein électromécanique doté d'un moteur frein électrique (3) dans un véhicule, doté d'un appareil de commande ou de contrôle (12) selon la revendication 10 destiné à commander les composants réglables du dispositif de frein (1).

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012205576 A1

- DE 102011004704 A1